# EUROPÄISCHE PATENTANMELDUNG

(11) **EP 2 308 590 A1**
(43) Veröffentlichungstag der Anmeldung: **13.04.2011**
(21) Anmeldenummer: 10177320.8
(22) Anmeldetag: 17.09.2010
(51) Int. Cl.: B01F 13/02, C12G 1/02

(54) **Behälter, insbesondere Maischegärtank für die Rotweinherstellung**

(30) Priorität: 22.09.2009 AT 14912009
(71) Anmelder: Böck, Hermann, 3730 Burgschleinitz 70 (AT)
(72) Erfinder: Böck, Hermann, 3730 Burgschleinitz 70 (AT)
(74) Vertreter: Babeluk, Michael

(57) **Zusammenfassung**

Die Erfindung betrifft einen Behälter (1), insbesondere Maischegärtank für die Rotweinherstellung, wobei im Behälter (1) ein Abdeckteil (5) zur Abdeckung eines flüssigen oder zähflüssigen Mediums angeordnet ist, welcher Abdeckteil (5) den Behälter (1) in einen das Medium beinhaltenden ersten Raum (9) und einen darüber angeordneten zweiten Raum (10) teilt, wobei der erste Raum (9) und der zweite Raum (10) über zumindest einen Verbindungskanal (11) miteinander strömungsverbunden sind, wobei der Verbindungskanal (11) von einem flüssigkeitsgefüllten Bereich des ersten Raumes (9) ausgeht. Um mit möglichst geringem konstruktivem Aufwand eine gute Durchmischung zu erreichen und unerwünschte Oxidationserscheinungen im Medium zu vermeiden ist vorgesehen, dass im Behälter (1) eine Vorrichtung (2) zum Mischen des Mediums mit zumindest einer zu mindestens einem Düsenteil (3) führenden Zuführleitung (4) für ein Gas angeordnet ist, wobei der Düsenteil (3) um eine Drehachse (1a) drehbar ausgebildet ist, und wobei der Verbindungskanal (11) konzentrisch zur Drehachse (1a) des Düsenteils (3) angeordnet ist.

## Beschreibung

Die Erfindung betrifft einen Behälter, insbesondere Maischegärtank für die Rotweinherstellung, wobei im Behälter ein Abdeckteil zur Abdeckung eines flüssigen oder zähflüssigen Mediums angeordnet ist, welcher Abdeckteil den Behälter in einen das Medium beinhaltenden ersten Raum und einen darüber angeordneten zweiten Raum teilt, wobei der erste Raum und der zweite Raum über zumindest einen Verbindungskanal miteinander strömungsverbunden sind, wobei der Verbindungskanal von einem flüssigkeitsgefüllten Bereich des ersten Raumes ausgeht.

Bei der klassischen Methode der Rotweingewinnung wird die Maische in Großbehälter gebracht und dort vergoren. Während der Gärung treiben die Kohlensäurebläschen die in der Maische enthaltenen Tresterbestandteile an die Oberfläche und bilden den sogenannten Tresterhut, der von Hand aus oder mittels Rührwerk mehrmals täglich untergetaucht wird. Mitunter sind in den Großbehältern Siebböden eingebaut, um den Maischeauftrieb zu verhindern und eine unerwünschte Oxidation oder einen sogenannten Essigstich der Maische zu verhindern. Unterhalb des ungebrochenen Tresterhutes können allerdings durch den Gärungsprozess hohe Gaskräfte entstehen, welche die Siebbodenhalterungen bzw. den Deckel des Behälters stark belasten oder sogar zerstören können.

Die DE 195 17 937 A1 beschreibt einen Gärtank für eine Maischegärung mit einem Tankbehälter und einem Deckel, sowie einem durch einen absenkbaren Siebboden gebildeten Niederhalter zum Eintauchen eines aufschwimmenden Trester- oder Maischekuchens. Unterhalb des Siebbodens befindet sich eine relativ zum Siebboden in ihrem Abstand verstellbare Aufbrechvorrichtung mit mehreren rostartigen Beaufschlagungsstellen zur Beaufschlagung und zum Zerbrechen des Trester- und Maischekuchens. Die Aufbrechvorrichtung ist mit einer Hubeinrichtung verbunden. Nachteilig ist, dass das Aufbrechen mittels des Siebbodens mit starken Beschädigungen des Rotweinmaischekuchens verbunden ist. Diese mechanische Beschädigung hat den Nachteil, dass viele Bitterstoffe in den Rotwein gelangen, welche nachträglich mit chemischen Mitteln entfernt werden müssen.

Die EP 1 329 254 B1 beschreibt eine Vorrichtung zur Maischehutbehandlung bei der Rotweinherstellung, wobei über zumindest einen als Teil der Düse ausgebildeten um eine Drehachse drehbaren Düsenteil Gas diskontinuierlich im unteren Teil des Behälters eingeblasen wird. Dies ermöglicht eine schonende Durchmischung des Rotweines, wodurch eine zu starke Beschädigung der Rotweinmaische vermieden werden kann.

Die DE 699 09 182 T2 offenbart einen gewölbten Bottich, welcher horizontal in zwei Teile geteilt ist, die miteinander durch eine Öffnung in der Teilungsstruktur miteinander verbunden sind. Der gewölbte Bottich wird durch eine Rohrleitung mit einer Öffnung im unteren Teil und einem Gitter vervollständigt, das innerhalb des Behälters an der Rohrleitung fixiert ist, nachdem die gepressten Trauben in den Behälter eingebracht worden sind. Der Deckel des Trebers, der sich am Gitter ansammelt, verhindert das Entweichen des Kohlendioxids, das während der Gärung entsteht und der daraus resultierende Druckanstieg lässt den Most in der Leitung zum oberen Behälter aufsteigen, von wo er zum unteren Behälter durch eine Spalte zum Befeuchten des Trebers zurückkehrt.

Weiters offenbart die DE 699 09 182 T2 eine Weinerzeugungsvorrichtung, welche im Wesentlichen aus einem Behälter besteht, der horizontal durch eine Wand in zwei Kammern unterteilt ist. Die Wand enthält eine Öffnung, die zwischen den beiden Kammern eine Verbindung ermöglicht, wobei diese Öffnung durch eine Ventileinrichtung verschließbar ist. Die beiden Behälter sind somit ständig miteinander durch diese Rohrleitung verbunden.

Aus der AT 005.698 U1 ist eine Vorrichtung zur Maischehutbehandlung bei der Rotweinherstellung bekannt, welche zumindest eine zu einem Düsenteil führende Zuführleitung für ein Gas aufweist. Zum Düsenteil kann gesteuert diskontinuierlich ein Gas zugeführt werden. Um auf schonende und einfache Weise eine gute Durchmischung zu erreichen, kann die Position und/oder die Ausströmrichtung des Düsenteils in genau definierter Weise im Behälter während des Betriebes verändert werden.

Die DE 195 17 937 A1 beschreibt einen Gärtank für eine Maischegärung mit einem Tankbehälter und einem Niederhalter zum Eintauchen des Tresterkuchens, wobei der Niederhalter als absenkbarer Siebboden ausgeführt ist.

Ein weiterer Weinbehälter mit einer Trennwand, welche den Behälter in zwei Kammern teilt, ist aus der US 4,969,391 A bekannt. Die Trennwand weist eine Öffnung mit einem automatisch betätigten Ventil auf, über welche die beiden Kammern miteinander strömungsverbunden werden können.

Es ist die Aufgabe der Erfindung, diese Nachteile zu vermeiden und mit möglichst geringem Aufwand eine gute Durchmischung zu erreichen und dabei eine unerwünschte Oxidation des sich im Behälter befindenden Mediums zu vermeiden.

Erfindungsgemäß wird dies dadurch erreicht, dass im Behälter eine Vorrichtung zum Mischen des Mediums mit zumindest einer zu mindestens einem Düsenteil führenden Zuführleitung für ein Gas angeordnet ist, wobei der Düsenteil um eine Drehachse drehbar ausgebildet ist, und wobei der Verbindungskanal konzentrisch zur Drehachse des Düsenteils angeordnet ist.

Der Verbindungskanal kann von der unteren Hälfte, vorzugsweise vom unteren Drittel des Innenraumes des Behälters ausgehen.

In einer besonders kompakten und einfachen Ausführungsvariante der Erfindung ist vorgesehen, dass der Verbindungskanal konzentrisch zur Zuführleitung des Düsenteils angeordnet ist, wobei vorzugsweise die Zuführleitung innerhalb des durch ein Rohr gebildeten Verbindungskanals angeordnet ist. Verbindungskanal und Zuführleitung können dabei durch den selben Bauteil gebildet sein.

Der Verbindungskanal zwischen dem ersten und dem zweiten Raum bewirkt einen Druckausgleich, wodurch der Abdeckteil, sowie dessen Haltemittel nur wenig beansprucht wird.

Wesentlich ist dabei, dass der Verbindungskanal von einem flüssigkeitsgefüllten Bereich weit unterhalb des Maischehutes ausgeht. Der entstehende Gasdruck im ersten Raum bewirkt, dass über den Verbindungskanal Flüssigkeit in den zweiten Raum oberhalb des Abdeckteiles gedrückt wird, wodurch einerseits ein weitgehender Druckausgleich zwischen dem ersten und dem zweiten Raum erreicht und andererseits ein Austrocknen des Tresterkuchens verhindert wird.

Zumindest eine Eintrittsöffnung in den Verbindungskanal kann sich dabei im Bereich eines den Düsenteil tragenden Dreharms befinden. Der Austritt aus dem Verbindungskanal ist in jedem Fall oberhalb des Abdeckteils angeordnet, welcher beispielsweise durch ein metallisches Siebblech gebildet sein kann.

Um verschiedene Füllhöhen im Behälter ohne Beeinträchtigung der Qualität des Rotweines zu ermöglichen, ist vorzugsweise vorgesehen, dass der Abdeckteil höhenverstellbar ausgebildet ist, wobei der Abdeckteil in zumindest einer gewählten Höhenposition fixierbar ist.

Die Erfindung wird im Folgenden anhand der Figuren näher erläutert. Es zeigen:

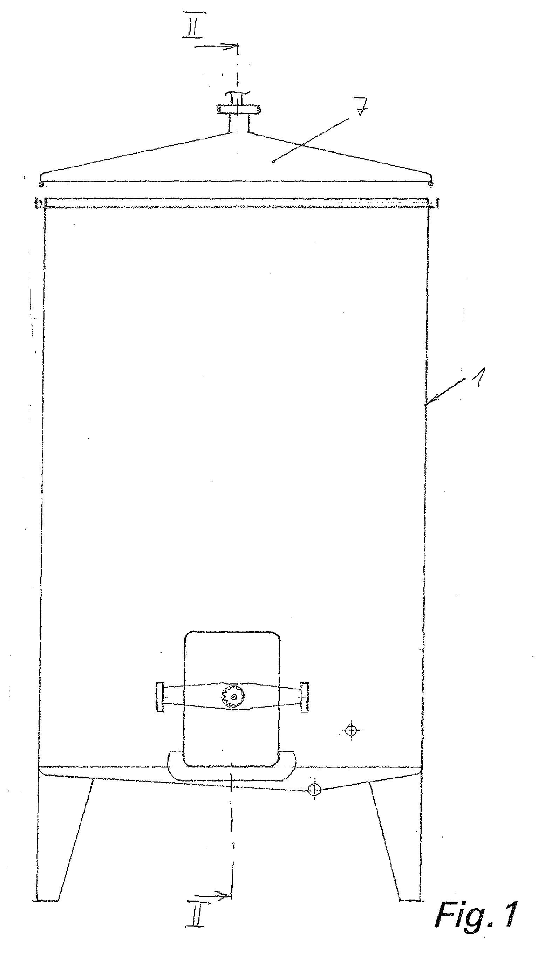

- Fig. 1: einen erfindungsgemäßen Behälter in einer Draufsicht; und
- Fig. 2: den erfindungsgemäßen Behälter in einem schnittgemäß der Linie II - II in Fig. 1.

In einem Behälter 1 zur Rotweinherstellung ist eine Vorrichtung 2 zum Mischen von Traubensaft und Maische angeordnet. Die Vorrichtung 2 besteht aus mindestens einem Düsenteil 3, welcher starr mit einer Zuführleitung 4 verbunden ist. Düsenteil 3 und Zuführleitung 4 sind drehbar im Behälter 1 angeordnet. Die Zuführleitung 4 ist durch den Behälterdeckel 7 des Behälters 1 geführt und tritt im Bereich einer drehbaren Kupplung 8 in den Behälterdeckel 7 ein. Die Verdrehung der Vorrichtung 2 erfolgt über einen nicht weiter dargestellten Motor. Zur Steuerung der zugeführten Gasmenge ist ein Steuerventil 14 vorgesehen, welches über eine nicht weiter dargestellte Steuereinheit gesteuert werden kann. Mit der Steuereinheit kann auch die Verdreheinrichtung für die Düsenteile 3 verbunden sein.

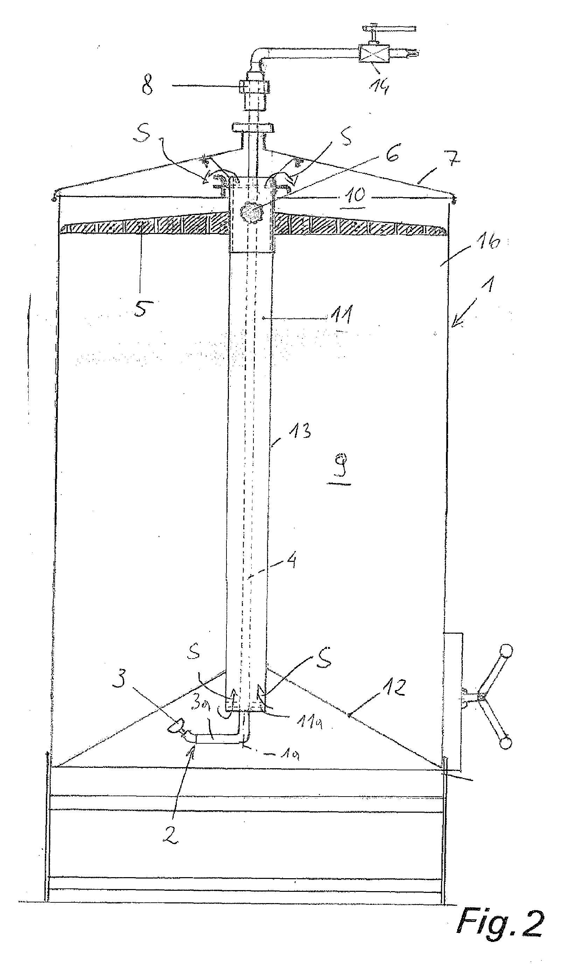

Der um die Drehachse 1a drehbare Düsenteil 3 ist im wesentlichen als Tellerdüse ausgebildet, wie aus Fig. 2 erkennbar ist.

Im Behälter 1 ist ein durch einen Siebboden beispielsweise aus Stahlblech gebildeter höhenverstellbarer Abdeckteil 5 angeordnet, dessen Höhe im Behälter 1 über eine Fixiereinrichtung 6 verstellt werden kann. Der Abdeckteil 5 teilt den Innenraum 1b des Behälters 1 in einen mit Traubensaft und Maische gefüllten ersten Raum 9 und einen im Wesentlichen gasgefüllten zweiten Raum 10. Zur Strömungsverbindung des ersten Raumes 9 und des zweiten Raumes 10 ist ein Verbindungskanal 11 vorgesehen, welcher von einem flüssigkeitsgefüllten Bereich des ersten Raumes 9 ausgeht und welcher oberhalb des Abdeckteiles 5 in den zweiten Raum 10 einmündet. Der Verbindungskanal 11 kann dabei konzentrisch zur Drehachse 1a und konzentrisch zur Zuführleitung 4 angeordnet sein und durch ein die Zuführleitung 4 umgebendes Rohr 13 gebildet sein. Zumindest eine Eintrittsöffnung 11a des Verbindungskanals 11 befindet sich dabei in der unteren Hälfte, vorzugsweise im unterem Drittel des Behälters 1. Besonders vorteilhaft ist es, wenn sich die Eintrittsöffnung 11a im Bereich des den Düsenteil 3 haltenden Dreharms 3a der Vorrichtung 1 und somit im Bereich des geneigt ausgebildeten Behälterbodens 12 befindet. Dadurch ist gewährleistet, dass auch bei geringen Füllmengen und entsprechend tief angeordnetem Abdeckteil 5 ein Druckausgleich zwischen dem ersten Raum 9 und dem zweiten Raum 10 und eine Befeuchtung des Tresterhutes von oben stattfindet.

Im Betrieb ist der erste Raum 9 mit Traubensaft und mit Maische gefüllt. Der Abdeckteil 5 ist über die Fixiereinrichtung 6 in einer bestimmter Höhe im Behälter 1 fixiert. Durch die einsetzende Gärung und den abdichtenden Tresterkuchen entsteht im ersten Raum 9 ein Überdruck, wodurch der Traubensaft entsprechend den Pfeilen S über den Verbindungskanal 11 in den zweiten Raum 10 gedrückt wird. Durch diesen Druckausgleich zwischen dem ersten Raum 9 und dem zweiten Raum 10 können die Haltekräfte für die Fixiereinrichtung 6 des Abdeckteiles 5 relativ klein gehalten werden. Zusätzlich wird eine Befeuchtung des durch einen Siebboden gebildeten Abdeckteiles 5 bewirkt, wodurch ein Austrocknen des Tresterkuchens verhindert wird. Unerwünschte Oxidationserscheinungen im Rotwein können somit auf einfache Weise vermieden werden.

## Patentansprüche

1. Behälter (1), insbesondere Maischegärtank für die Rotweinherstellung, wobei im Behälter (1) ein Abdeckteil (5) zur Abdeckung eines flüssigen oder zähflüssigen Mediums angeordnet ist, welcher Abdeckteil (5) den Behälter (1) in einen das Medium beinhaltenden ersten Raum (9) und einen darüber angeordneten zweiten Raum (10) teilt, wobei der erste Raum (9) und der zweite Raum (10) über zumindest einen Verbindungskanal (11) miteinander strömungsverbunden sind, wobei der Verbindungskanal (11) von einem flüssigkeitsgefüllten Bereich des ersten Raumes (9) ausgeht, **dadurch gekennzeichnet, dass** im Behälter (1) eine Vorrichtung (2) zum Mischen des Mediums mit zumindest einer zu mindestens einem Düsenteil (3) führenden Zuführleitung (4) für ein Gas angeordnet ist, wobei der Düsenteil (3) um eine Drehachse (1a) drehbar ausgebildet ist, und wobei der Verbindungskanal (11) konzentrisch zur Drehachse (1a) des Düsenteils (3) angeordnet ist.

2. Behälter (1) nach Anspruch 1, **dadurch gekennzeichnet, dass** der Verbindungskanal (11) von der unteren Hälfte, vorzugsweise vom unteren Drittel des Innenraumes des Behälters (1) ausgeht.

3. Behälter (1) nach Anspruch 1 oder 2, **dadurch gekennzeichnet, dass** der Verbindungskanal (11) konzentrisch zur Zuführleitung (4) des Düsenteils (3) angeordnet ist.

4. Behälter (1) nach einem der Ansprüche 1 bis 3, **dadurch gekennzeichnet, dass** die Zuführleitung (4) innerhalb des Verbindungskanals (11) angeordnet ist.

5. Behälter (1) nach einem der Ansprüche 1 bis 4, **dadurch gekennzeichnet, dass** zumindest eine Eintrittsöffnung (11a) des Verbindungskanals (11) im Bereich eines den Düsenteil (3) tragenden Dreharms (2) angeordnet ist.

6. Behälter (1) nach einem der Ansprüche 1 bis 5, **dadurch gekennzeichnet, dass** der Verbindungskanal (11) oberhalb des Abdeckteils (5) in den zweiten Raum (10) mündet.

7. Behälter (1) nach einem der Ansprüche 1 bis 6, **dadurch gekennzeichnet, dass** der Abdeckteil (5) durch ein Siebblech gebildet ist.

8. Behälter (1) nach einem der Ansprüche 1 bis 7, **dadurch gekennzeichnet, dass** der Abdeckteil (5) höhenverstellbar ausgebildet ist, wobei der Abdeckteil (5) in zumindest einer gewählten Höhenposition fixierbar ist.
